(19) Europäisches Patentamt
European Patent Office
Office européen des brevets

(11) EP 0 816 875 A1

(12) EUROPÄISCHE PATENTANMELDUNG

(43) Veröffentlichungstag:
07.01.1998 Patentblatt 1998/02

(51) Int. Cl.[6]: **G02B 5/08**, G02B 1/10

(21) Anmeldenummer: 96810430.7

(22) Anmeldetag: 28.06.1996

(84) Benannte Vertragsstaaten:
AT BE CH DE DK ES FI FR GB GR IE IT LI LU MC NL PT SE

(71) Anmelder:
Alusuisse Technology & Management AG
8212 Neuhausen am Rheinfall (CH)

(72) Erfinder: Gillich, Volkmar
8212 Neuhausen am Rheinfall (CH)

# (54) Reflektor mit reflexionserhöhendem Schichtverbund

(57) Reflektor, enthaltend einen reflexionserhöhenden Schichtverbund als reflektierende Oberflächenschicht auf einem Reflektorkörper, wobei der Schichtverbund eine gegen die zu reflektierende Strahlung gerichteten äusseren Schicht, die HI-Schicht, mit einem Brechungsindex $n_2$ und eine zwischen dem Reflektorkörper und der äusseren Schicht liegende LI-Schicht mit einem gegenüber $n_2$ kleineren Brechungsindex $n_1$ enthält, und die LI- und HI-Schichten λ/4-Schichten darstellen. Die HI-Schicht ist eine Sol-Gel-Schicht, und die optischen Schichtdicken $d_{opt,1}$ der LI-Schicht und $d_{opt,2}$ der HI-Schicht genügen der Massgabe

$$d_{opt,i} = d_i \, . \, n_i = l_i \, . \, \lambda/4 \pm 20 \text{ nm} , \; i = 1,2 ,$$

wobei $d_1$ die Schichtdicke der LI-Schicht in nm, $d_2$ die Schichtdicke der HI-Schicht in nm, λ die mittlere Wellenlänge in nm des auf die Reflektoroberfläche eingestrahlten Lichtes und $l_1$, $l_2$ ungerade natürliche Zahlen bezeichnen. Die LI-Schicht ist eine anodisch erzeugte Sperrschicht aus Aluminiumoxid oder eine Sol-Gel-Schicht.

EP 0 816 875 A1

## Beschreibung

Vorliegende Erfindung betrifft einen Reflektor, enthaltend einen reflexionserhöhenden Schichtverbund als reflektierende Oberflächenschicht auf einem Reflektorkörper, wobei der Schichtverbund eine gegen die zu reflektierende Strahlung gerichtete äussere Schicht, die HI-Schicht, mit einem Brechungsindex $n_2$ und eine zwischen dem Reflektorkörper und der äusseren Schicht liegende LI-Schicht mit einem gegenüber $n_2$ kleineren Brechungsindex $n_1$ enthält, und die LI- und HI-Schichten $\lambda/4$-Schichten darstellen. Die Erfindung betrifft weiter die Verwendung solcher Reflektoren mit einem reflexionserhöhenden Schichtverbund, sowie ein Verfahren zu deren Herstellung.

Reflektoren, die ein auf Aluminium abgeschiedenes Schichtsystem, enthaltend LI/HI-Schichten (LI/HI = **L**ow Refraction **I**ndex / **H**igh Refraction **I**ndex), d.h. Schichten, die aus einer inneren Schicht mit Brechungsindex $n_1$ (LI) und einer äusseren Schicht mit einem gegenüber $n_1$ höheren Brechungsindex $n_2$ (HI) aufweisen, sind an sich als Reflektoren mit reflexionserhöhenden Eigenschaften bekannt.

Die Herstellung solcher Reflektoren geschieht üblicherweise durch Aufbringen hochreiner, sehr dünner Al-Schichten auf einen Reflektorkörper aus beispielsweise Glas oder technischem Aluminium (d.h. Aluminium niedriger Reinheit) durch Anwendung beispielsweise von PVD- (physical vapour deposition) Methoden wie Sputtern oder Aufdampfen. Die hochreine Al-Schicht wird dann mittels einer LI-Schicht aus beispielsweise $Al_2O_3$ oder $SiO_2$, welche üblicherweise durch PVD- oder CVD- (chemical vapour deposition) Methoden aufgebracht werden, versehen und mit einer weiteren HI-Schicht zu einer reflexionserhöhenden LI/HI-Reflektoroberfläche vervollständigt.

Der geringen Schichtdicke wegen, können PVD-Al-Schichten im allgemeinen nicht anodisiert werden, so dass das Abscheiden der LI- und HI-Schichten durch PVD- oder CVD-Methoden in Hochvakuum erfolgt. Das Erreichen hoher Reflexionseigenschaften von reflexionserhöhenden Schichtverbunden bedingt eine gute Homogenität sowie die genaue Einhaltung enger, genau vordefinierter Schichtdicken-Toleranzen der einzelnen Schichten. Die Einhaltung genauer Schichtdicken-Toleranzen von in Hochvakuum mittels PVD- oder CVD-Methoden deponierten Oxidschichten, sowie deren Kontrolle ist jedoch schwierig zu bewerkstelligen und bedingt aufwendige und teure Vorrichtungen. Die Depositionsrate von CVD- oder PVD-Schichten, insbesondere von derartigen dielektrischen Schichten, ist verfahrensbedingt -- im Vergleich zu chemischen Verfahren -- relativ niedrig, was hinsichtlich der hohen Anlagekosten von Hochvakuum-Depositionsanlagen zu hohen Herstellungskosten führt. Zudem wird durch die kleinen Depositionsraten und der Notwendigkeit von Hochvakuumanlagen für PVD- oder CVD-Prozesse die Anwendung einer kontinuierlichen Fertigung erschwert oder gar verunmöglicht.

Eine andere Möglichkeit zur Herstellung reflexionserhöhender Schichtverbunde ist die chemische oder anodische Oxidation von Aluminiumoberflächen und nachfolgende Abscheidung einer dielektrischen Schicht mit gegenüber Aluminiumoxid höherem Brechungsindex. Dazu werden Reflektoren aus Aluminium oder Reflektoren mit einer für die anodische Oxidation genügend dicken Aluminiumschicht benötigt. Die anodische Oxidation geschieht dabei üblicherweise mit Gleichstrom in einem Schwefelsäureelektrolyten (GS-Anodisation). Bei Wahl entsprechender Anodisierparameter, kann die resultierende LI-Schicht zwar eine homogene Schicht mit vordefinierter Schichtdicke darstellen, zeigt aber üblicherweise eine durch das Verfahren bedingte hohe Porosität. Die Deposition der HI-Schicht erfolgt meist wiederum mittels PVD- oder CVD-Deposition. Solche reflexionserhöhenden Schichtverbunde können beispielsweise auch in einem Bandverfahren hergestellt werden.

Aufgabe vorliegender Erfindung ist die Bereitstellung von kostengünstigen Reflektoren mit reflexionserhöhenden Schichtverbunden, insbesondere für lichttechnische Zwecke, welche die oben dargelegten Nachteile der aus dem Stand der Technik bekannten Reflektoren vermeiden und sich insbesondere für die kontinuierliche Fertigung in einer Bandbeschichtungsanlage eignen.

Erfindungsgemäss wird dies dadurch erreicht, dass die HI-Schicht eine Sol-Gel-Schicht ist, und die optischen Schichtdicken $d_{opt,1}$ der LI-Schicht und $d_{opt,2}$ der HI-Schicht der Massgabe

$$d_{opt,i} = d_i \cdot n_i = l_i \cdot \lambda/4 \pm 20 \text{ nm} , \text{ i} = 1,2$$

entsprechen, wobei $d_1$ die Schichtdicke der LI-Schicht in nm, $d_2$ die Schichtdicke der HI-Schicht in nm, $\lambda$ die mittlere Wellenlänge in nm des auf die Reflektoroberfläche eingestrahlten Lichtes und $l_1$, $l_2$ ungerade natürliche Zahlen bezeichnen.

Dabei ist zu berücksichtigen, dass der Brechungsindex $n$, d.h. $n_1$ oder $n_2$, -- wegen der Dispersion -- von der Wellenlänge abhängig ist, d.h. in vorliegendem Text beziehen sich $n_1$ und $n_2$ immer auf die entsprechende Wellenlänge des auf die Reflektoroberfläche eingestrahlten Lichtes. Zudem ist zu berücksichtigen, dass die Bedingung $d_i \cdot n_i = l_i \cdot \lambda/4$ , i = 1,2 für den Erhalt eines reflexionserhöhenden Schichtverbundes exakt nur für senkrecht auf die Reflektoroberfläche einfallende elektromagnetische Strahlung gilt.

Die LI/HI-Mehrfachschichten sind aus mindestens zwei Schichten mit verschiedenen Brechungsindizes aufgebaut. Die Kombination zweier auf einer Metalloberfläche befindlicher dielektrischer Schichten mit verschiedenem Brechungsindex, bei der die Schicht mit dem tieferen Brechungsindex auf die Reflektorkörperoberfläche zu liegen kommt, erlaubt

gegenüber einer einzelnen homogenen Schicht eine Verbesserung der Reflexionseigenschaften. Bei gegebener Schichtzusammensetzung kann die höchste Reflexion dann erreicht werden, wenn die optischen Schichtdicken der einzelnen Schichten $\lambda/4$ oder ein ungerades Vielfaches davon betragen. Bezüglich der Zusammensetzung der Schichtmaterialien werden die besten Reflexionseigenschaften dann erreicht, wenn der Unterschied der Brechungsindizes der einzelnen Schichten möglichst gross wird.

Der erfindungsgemässe Reflektor, der als erfindungswesentliches Merkmal eine HI-Sol-Gel-Schicht aufweist, zeigt gegenüber den aus dem Stand der Technik bekannten Reflektoren u.a. die Vorteile, dass derartige HI-Schichten mit der geforderten Schichtdickenkonstanz kostengünstig aufgebracht werden können, deren Hafteigenschaften auf der LI-Schicht beispielsweise durch Wahl entsprechender Vernetzungsmittel, d.h. ohne die Wahlfreiheit für die anderen, den Brechungsindex der HI-Schicht bestimmenden Komponenten einzuschränken, auf einfache Weise optimiert werden können, eine grosse Auswahl an handelsüblichen, hochtransparenten Sol-Gel-Schichten bereits zur Verfügung steht, und die Sol-Gel-Schichten allgemein ein hohes Einebnungsverhalten aufweisen.

Durch die Wahl der Zusammensetzung des für die Sol-Gel-Schicht zu verwendenden Sols, insbesondere allfälliger Vernetzungsmittel, kann die Viskosität des Sols für eine vorbestimmte Schichtdicke der Sol-Gel-Schicht auf einfache Weise optimiert werden. Sol-Gel-Schichten weisen zudem allgemein eine hohe Kratzfestigkeit und gute Umformbarkeit auf, wobei diese Eigenschaften durch die Wahl der Zusammensetzung der Sol-Gel-Schicht optimiert werden können. Im weiteren sind Sol-Gel-Schichten im allgemeinen gut PVD-beschichtbar, wodurch problemlos allfällig gewünschte weitere Schichten, beispielsweise teiltransparente Schichten, auf die freie Oberfläche der HI-Schicht aufgebracht werden können.

Ein wesentlicher Vorteil der erfindungsgemässen Reflektoren besteht jedoch im Ersatz von PVD- oder CVD-deponierten HI-Schichten durch Sol-Gel-HI-Schichten, wodurch die erfindungsgemässen Reflektoren vollständig auf kostengünstigen Bandbeschichtungsanlagen hergestellt werden können.

Der für die erfindungsgemässen Reflektoren benötigte Reflektorkörper besteht bevorzugt aus Reinaluminium oder einer Aluminiumlegierung. Der Aluminiumkörper kann Teil eines Stückgutes, beispielsweise eines Profiles, Balkens oder eine andere Form von Stücken, einer Platte, eines Bandes, Bleches oder einer Folie aus Aluminium sein, oder eine Aluminium-Deckschicht eines Verbundwerkstoffes, insbesondere eine Aluminiumdeckschicht einer Verbundplatte darstellen, oder eine auf einen beliebigen Werkstoff -- beispielsweise elektrolytisch --abgeschiedene Aluminiumschicht betreffen. In einer bevorzugten Ausführungsform betrifft der die Aluminiumschicht enthaltende Reflektorkörper ein Werkstück aus Aluminium, welches z.B. durch ein Walz-, Extrusions-, Schmiede- oder Fliesspressverfahren hergestellt wird. Der die Aluminiumschicht enthaltende Reflektorkörper kann auch durch Biegen, Tiefziehen, Kaltfliesspressen oder dergleichen umgeformt sein.

Mit dem Werkstoff Aluminium sind in vorliegendem Text Aluminium aller Reinheitsgrade, sowie alle handelsüblichen Aluminiumlegierungen umfasst. Beispielsweise umfasst der Begriff Aluminium alle Walz-, Knet-, Guss-, Schmiede- und Presslegierungen aus Aluminium. Zweckmässigerweise besteht die Aluminiumschicht aus Reinaluminium mit einem Reinheitsgrad von gleich oder grösser 98.3 Gew.-% oder Aluminiumlegierungen aus diesem Aluminium mit wenigstens einem der Elemente aus der Reihe von Si, Mg, Mn, Cu, Zn oder Fe. Die Aluminiumschicht aus Reinaluminium weist beispielsweise eine Reinheit von 98.3 Gew.-% und höher, zweckmässig 99.0 Gew.-% und höher, bevorzugt 99.9 Gew.-% und höher und insbesondere 99.95 Gew.-% und höher auf.

Neben Aluminium genannter Reinheiten kann die Aluminiumschicht auch aus einer Aluminiumlegierung bestehen, enthaltend 0.25 Gew.-% bis 5 Gew.-%, insbesondere 0.5 bis 2 Gew.-%, Magnesium oder enthaltend 0.2 bis 2 Gew.-% Mangan oder enthaltend 0.5 bis 5 Gew.-% Magnesium und 0.2 bis 2 Gew.-% Mangan, insbesondere z.B. 1 Gew.-% Magnesium und 0.5 Gew.-% Mangan oder enthaltend 0.1 bis 12 Gew.-%, vorzugsweise 0.1 bis 5 Gew.-%, Kupfer oder enthaltend 0.5 bis 5 Gew.-% Zink und 0.5 bis 5 Gew.-% Magnesium oder enthaltend 0.5 bis 5 Gew.-% Zink, 0.5 bis 5 Gew.-% Magnesium und 0.5 bis 5 Gew.-% Kupfer oder enthaltend 0.5 bis 5 Gew.-% Eisen und 0.2 bis 2 Gew.-% Mangan, insbesondere z.B. 1.5 Gew.-% Eisen und 0.4 Gew.-% Mangan.

Die Oberfläche des Reflektorkörpers kann eine beliebige Gestalt aufweisen und kann gegebenenfalls auch strukturiert sein. Bei gewalzten Reflektorkörperoberflächen können diese beispielsweise mittels Hochglanz- oder Designerwalzen behandelt sein. Eine bevorzugte Verwendung strukturierter Reflektorkörperoberflächen findet sich beispielsweise für Reflektoren in der Tageslichtbeleuchtung, wobei insbesondere strukturierte Oberflächen mit Strukturgrössen von 0.1 bis 1 mm zur Anwendung gelangen.

Erfindungswesentlich ist nun, dass die HI-Schicht eine Sol-Gel-Schicht darstellt. Als Sol-Gel-Schichten werden dabei Schichten bezeichnet, die mit einem Sol-Gel-Verfahren hergestellt werden. Bei den Sol-Gel-Schichten handelt es sich beispielsweise um Xerogele. Zur Herstellung der für die erfindungsgemässen Reflektoren benötigten Sol-Gel-Schichten werden Lyosole bevorzugt, wobei die Lyosole Organo- oder Hydrosole darstellen können. Bevorzugt werden Organosole. Beispielsweise durch Koagulation wird dann die für die erfindungsgemässen Reflektoren benötigte Gel-Schicht, im folgenden Sol-Gel-Schicht, gebildet.

Weiter bevorzugt werden für die Herstellung der Sol-Gel-Schichten Sole, d.h. kolloidale Lösungen, verwendet, in denen ein nachstehend genanntes Oxid oder ein Gemisch der nachstehend aufgeführten Oxide in feinster Verteilung

in einem flüssigen Medium dispergiert sind.

Bevorzugt besteht die HI-Schicht aus, oder enthält die HI-Schicht Oxide von Alkali-, z.B. Li, Erdalkali-, z.B. Mg, Ca, Sr, Ba, und/oder Übergangsmetallen, wie z.B. Sc, Ti, V, Cr, Mn, Fe, Co, Ni, Y, Zr, Nb, Mo, Te, Ru, Rh, Pd, Hf, Ta, W, Re, Os, Ir, Pt und/oder Lanthanoiden wie z.B. La, Ce, Pr, Nd, Pm, Dy, Yb oder Lu, usw. Bevorzugt finden für die erfindungsgemässen Reflektoren mit einem Sol-Gel-Verfahren deponierte HI-Schichten aus im wesentlichen Titanoxid (Ti-Oxid) mit einem Brechungsindex von ca. 2.5, Praseodym-Titanoxid (PrTi-Oxid), Lanthan-Titanoxid (LaTi-Oxid), Tantaloxid (Ta-Oxid), Hafniumoxid (Hf-Oxid), Niobiumoxid (Nb-Oxid), Zn-Oxid, Ce-Oxid oder einem Oxid einer Legierung der genannten Soffe Anwendung. Besonders bevorzugt werden jedoch HI-Schichten enthaltend oder bestehend aus $TiO_2$, Ta-Oxid, PrTi-Oxid oder LaTi-Oxid.

Die Sol-Gel-Schichten haben glasartigen Charakter. Sol-Gel-Schichten können reproduzierbar mit einer vorgegebenen Schichtdicke hergestellt werden. Zudem können die Sol-Gel-Schichten als Schutz- oder Passivierungsschichten verwendet werden, wodurch die Reflektoroberflächen durch die Sol-Gel-Schicht vor Witterungseinflüssen oder vor Korrosion geschützt werden.

Weitere Sol-Gel-Schichten enthalten beispielsweise Polymerisationsprodukte aus organisch substituierten Alkoxysiloxanen der allgemeinen Formel

$$Y_nSi(OR)_{4-n}$$

wobei Y z.B. eine nicht-hydrolisierbare monovalente organische Gruppe und R z.B. eine Alkyl-, Aryl-, Alkaryl- oder Aralkyl-Gruppe bezeichnen, und n eine natürliche Zahl von 0 bis 3 ist. Beträgt n gleich 1 oder 2, kann R eine $C_1$-$C_4$-Alkyl-Gruppe sein. Y kann eine Phenylgruppe, n gleich 1 und R eine Methylgruppe sein.

In anderer Ausführungsform kann die Sol-Gel-Schicht ein Polymerisationsprodukt aus organisch substituierten Alkoxyverbindungen der allgemeinen Formel

$$X_nAR_{4-n}$$

sein, wobei A die Bedeutung von Si, Ti, Zr oder Al hat, X die Bedeutung von HO-, Alkyl-O- oder Cl- hat, R die Bedeutung von Phenyl, Alkyl, Alkenyl, Vinylester oder Epoxyether hat und n eine Zahl von 1, 2 oder 3 bedeutet. Beispiele für Phenyl sind unsubstituiertes Phenyl, oder mono-, di- oder trisubstituiertes $C_1$-$C_9$-alkylsubstituiertes Phenyl, für Alkyl gleich Methyl, Ethyl, Propyl, iso-Propyl, n-Butyl, iso-Butyl, Pentyl usw., für Alkenyl $-CH=CH_2$, Allyl, 2-Methylallyl, 2-Butenyl usw., für Vinylester $-(CH_2)_3-O-C(=O)-C(-CH_3)=CH_2$ und für Epoxyether $-(CH_2)_3-O-CH_2-CH(-O-)CH_2$.

Derartige Sol-Gel-Schichten mit Polymerisationsprodukten aus organisch substituierten Alkoxyverbindungen werden vorteilhaft durch einen Sol-Gel-Prozess direkt oder indirekt auf die Oberfläche des Reflektorkörpers bzw. auf die freie Oberfläche der LI-Schicht aufgebracht. Zu diesem Zwecke werden beispielsweise Alkoxide und Halogensilane gemischt und in Gegenwart von Wasser und geeigneten Katalysatoren hydrolysiert und kondensiert. Nach Entfernung des Wassers und Lösungsmittels bildet sich ein Sol, das durch Eintauchen, Schleudern, Spritzen usw. auf die zu beschichtende Oberfläche aufgebracht wird, wobei sich das Sol in einen Gel-Film umwandelt, beispielsweise unter Einfluss von Temperatur und/oder Strahlung. In der Regel werden zur Bildung des Sols Silane verwendet; es ist auch möglich, die Silane teilweise durch Verbindungen zu ersetzen, welche anstelle des Siliciums Titan, Zirkon oder Aluminium enthalten. Damit kann die Härte, Dichte und der Brechungsindex der Sol-Gel-Schicht variiert werden. Die Härte der Sol-Gel-Schicht kann ebenso durch die Verwendung verschiedener Silane gesteuert werden, beispielsweise durch Ausbildung eines anorganischen Netzwerkes zur Steuerung der Härte und der thermischen Stabilität, oder durch Verwendung eines organischen Netzwerkes zur Steuerung der Elastizität. Eine Sol-Gel Schicht, welche zwischen den anorganischen und organischen Polymeren eingeordnet werden kann, kann über den Sol-Gel-Prozess durch gezielte Hydrolyse und Kondensation von Alkoxiden, vorwiegend des Siliciums, Aluminiums, Titans oder Zirkons auf die zu beschichtende Oberfläche aufgebracht werden. Durch den Prozess wird ein anorganisches Netzwerk aufgebaut und über entsprechend derivatisierte Kieselsäure-Ester können zusätzlich organische Gruppen eingebaut werden, die einerseits zur Funktionalisierung und andererseits zur Ausbildung definierter organischer Polymersysteme genutzt werden. Im weiteren kann der Sol-Gel-Film auch durch Elektro-Tauchlackierung nach dem Prinzip der kataphoretischen Abscheidung einer amin- und organisch modifizierten Keramik abgeschieden werden.

Die HI-Schicht kann auch eine Sol-Gel-Schicht, welche aus zwei oder mehreren Teilschichten besteht, darstellen. Die HI-Schicht kann dabei auch aus mehreren bezüglich ihrer Zusammensetzung und Brechungsindizes verschiedenen Teilschichten aufgebaut sein. Wesentlich dabei ist, dass jede Teilschicht einen gegenüber der LI-Schicht höheren Brechungsindex aufweist.

Bezüglich der LI/HI-Schichtdicken wurde im Rahmen der erfinderischen Tätigkeit gefunden, dass die Reflexionseigenschaften im wesentlichen periodisch verlaufen, wobei mit zunehmenden Schichtdicken, insbesondere bei Schichten mit optischen Schichtdicken $d_{opt,i}$ grösser als $6 \cdot \lambda/4$, die Reflexionseigenschaften für lichttechnische Zwecke

ungenügend sind. Bevorzugt werden daher Schichtdicken, die eine optische Schichtdicke aufweisen, die kleiner als $6 \cdot \lambda/4$ ist und insbesondere solche mit $l_1$ und $l_2$ gleich 1 oder 3.

Zudem wurde gefunden, dass Reflektoren mit LI/HI-Schichtdicken im Schichtdickenbereich von $d_i \cdot n_i = l_i \cdot \lambda/4 \pm 20$ nm ($i$ = 1, 2) liegen, im wesentlichen dieselben guten Reflexionseigenschaften zeigen, so dass die Schichtdicken $d_i$ nicht exakt die Bedingung $d_i \cdot n_i = l_i \cdot \lambda/4$, i = 1,2 erfüllen müssen.

Die LI- und HI-Schichten weisen somit über die ganze Reflektoroberfläche eine konstante Schichtdicke auf, die um nicht mehr als ± 20 nm variiert. Die Schichtdicken $d_1$ der LI-Schicht und $d_2$ der HI-Schicht betragen bevorzugt je zwischen 30 und 350 nm und insbesondere zwischen 40 und 120 nm.

Ganz bevorzugt variiert die an einem bestimmten Ort gemessene Schichtdicke $d_1$ bzw. $d_2$ gegenüber den über den ganzen Schichtverbund gemittelten Schichtdicke $\tilde{d}_1$ bzw. $\tilde{d}_2$ um nicht mehr als ± 5%.

Weiter bevorzugt werden die Schichtdicken der LI- und HI-Schichten derart gewählt, dass die optischen Schichtdicken dieser Schichten der Massgabe

$$d_{opt,i} = d_i \cdot n_i = l_i \cdot \lambda/4 \pm 20 \text{ nm}, \ i = 1,2$$

für eine Wellenlänge $\lambda$ genügen, welche der mittleren, für das menschliche Auge bei Tageslicht am besten wahrnehmbaren Wellenlänge des sichbaren Lichtes entspricht, welche bei ca. 550 nm liegt. Insbesondere werden die Schichtdikken der LI- und HI-Schichten derart gewählt, dass vorstehende Massgaben für deren optische Schichtdicken für Wellenlängen $\lambda$ = 550 nm ± 200 nm gelten.

Damit erstens eine konstruktive Interferenz auftreten kann und zweitens die Absorbtion der zu reflektierenden elektromagnetischen Strahlung möglichst gering ausfällt, muss der Schichtverbund zudem für die zu reflektierende Strahlung transparent und porenfrei sein. Letztere Erfordernis dient neben der Minimierung der Absorbtion auch der Vermeidung einer unkontrollierbaren diffusen Streuung. Unter der Erfordernis der Porenfreiheit wird dabei nicht eine absolute Porenfreiheit verstanden. Wichtig dabei ist, dass die Porosität des Schichtverbundes kleiner als 1 % beträgt. Der Schichtverbund mit derart ausgebildeten LI/HI-Schichten weist bevorzugt eine Absorption der eingestrahlten Lichtenergie von weniger als 3 % auf.

Die LI-Schicht besteht bevorzugt aus einer anodisch erzeugten Sperrschicht aus Aluminiumoxid oder einer LI-Sol-Gel-Schicht.

Die Herstellung einer anodisch erzeugten LI-Aluminiumoxid-Sperrschicht bedingt beispielsweise eine saubere Aluminiumoberfläche, d.h. eine anodisch zu oxidierende Aluminiumoberfläche muss üblicherweise vorgängig zur elektrolytischen Oxidation einer Oberflächenbehandlung, der sogenannten Vorbehandlung, zugeführt werden.

Die Aluminiumoberflächen weisen meist eine natürlich entstehende Oxidschicht auf, die häufig aufgrund ihrer Vorgeschichte durch Fremdsubstanzen verunreinigt ist. Solche Fremdsubstanzen können beispielsweise Reste von Walzhilfsmitteln, Transportschutzölen, Korrosionsprodukte oder eingepresste Fremdpartikel und ähnlichem sein. Zum Zwecke der Entfernung solcher Fremdsubstanzen werden die Aluminiumoberflächen üblicherweise mit Reinigungsmitteln, die einen gewissen Beizangriff ausüben, chemisch vorbehandelt. Dazu eignen sich --neben sauren wässrigen Entfettungsmitteln -- insbesondere alkalische Entfettungsmittel auf Basis Polyphosphat und Borat. Eine Reinigung mit mässigem bis starkem Materialabtrag bildet das Beizen oder Aetzen mittels stark alkalischen oder sauren Beizlösungen, wie z.B. Natronlauge oder ein Gemisch aus Salpetersäure und Flusssäure. Dabei werden die natürliche Oxidschicht und damit auch alle darin eingebauten Verunreinigungen entfernt. Bei Verwendung von stark angreifenden alkalischen Beizen entstehen oft Beizbeläge, die durch eine saure Nachbehandlung entfernt werden müssen. Eine Reinigung ohne Oberflächenabtrag bildet das Entfetten der Oberflächen durch Anwendung organischer Lösungsmittel oder wässriger oder alkalischer Reiniger.

Je nach Oberflächenzustand ist auch ein mechanischer Oberflächenabtrag durch abrasive Mittel notwendig. Eine solche Oberflächenvorbehandlung kann beispielsweise durch Schleifen, Strahlen, Bürsten oder Polieren geschehen und gegebenenfalls durch eine chemische Nachbehandlung ergänzt werden.

Aluminiumoberflächen zeigen im metallisch blanken Zustand ein sehr hohes Reflexionsvermögen für Licht- und Wärmestrahlen. Je glatter die Oberfläche, desto höher ist die gerichtete Reflexion und desto glänzender wirkt die Oberfläche. Höchsten Glanz erziehlt man auf Reinstaluminium und auf Speziallegierungen, wie beispielsweise AlMg oder AlMgSi.

Eine hoch reflektierende Oberfläche wird beispielsweise durch Polieren, Fräsen, durch Walzen mit hochglanzpolierten Walzen im letzten Walzgang oder durch chemisches oder elektrolytisches Glänzen erreicht. Das Polieren kann beispielsweise mit Schwabbelscheiben aus weichem Tuch und gegebenfalls unter Verwendung einer Polierpaste geschehen. Beim Polieren durch Walzen kann im letzten Walzgang beispielsweise mittels gravierter oder geätzter Stahlwalzen oder durch eine vorgegebene Struktur aufweisende und zwischen den Walzen und dem Walzgut angeordnete Mittel zusätzlich eine vorgegebene Oberflächenstruktur in die Aluminiumoberfläche eingeprägt werden. Das chemische Glänzen geschieht beispielsweise durch Anwendung eines hochkonzentrierten Säuregemisches bei üblicherweise hohen Temperaturen von ca. 100 °C. Für das elektrolytische Glänzen können saure oder alkalische Elektrolyte eingesetzt werden, wobei üblicherweise saure Elektrolyte bevorzugt werden.

Der Reflektorkörper wird anschliessend mit wenigstens dem zu oxidierenden Teil der Aluminiumschicht in eine elektrisch leitende Flüssigkeit, den Elektrolyten, gegeben und als Anode an einer Gleichspannungsquelle angeschlossen, wobei als negative Elektrode üblicherweise rostfreier Stahl, Graphit, Blei oder Aluminium verwendet wird.

Der Elektrolyt ist derart beschaffen, dass er das während dem Anodisierprozess gebildete Aluminiumoxid chemisch nicht auflöst, d.h. es findet keine Rücklösung des Aluminiumoxids statt. Im Gleichspannungsfeld entwickelt sich an der Kathode Wasserstoffgas und an der Anode Sauerstoffgas. Der an der Aluminiumoberfläche entstehende Sauerstoff bildet durch Reaktion mit dem Aluminium eine während dem Prozess zunehmend dickere Oxidschicht. Da der Schichtwiderstand mit zunehmender Dicke der Sperrschicht schnell ansteigt, nimmt der Stromfluss entsprechend schnell ab und das Schichtwachstum hört auf.

Die elektrolytische Herstellung von derartigen LI-Schichten erlaubt die präzise Kontrolle der entsprechenden Schichtdicke. Die maximal erzielte Schichtdicke der Aluminiumoxid-Sperrschicht in Nanometer (nm) entspricht in erster Näherung der angelegten und in Volt (V) gemessenen Spannung, d.h. die maximal erzielte Schichtdicke steht in linearer Abhängigkeit zur Anodisierspannung, wobei der Spannungsabfall an der Deckschicht berücksichtigt werden muss. Der exakte Wert der maximal erreichten Schichtdicke in Abhängigkeit der angelegten Gleichspannung $U$ und unter Berücksichtigung des Spannungsabfalles an der Deckschicht kann durch einen einfachen Vorversuch bestimmt werden und liegt von 1.2 bis 1.6 nm/V, wobei der genaue Werte der Schichtdicke in Funktion der angelegten Spannung abhängig ist vom verwendeten Elektrolyten, d.h. dessen Zusammensetzung sowie dessen Temperatur.

Demnach beträgt die minimal angelegte Anodisierspannung $U_{min}$ in Volt:

$$d_1/1.6 \leq U_{min} \leq d_1/1.2$$

wobei $d_1$ die Schichtdicke in nm der LI-Schicht mit Brechungsindex $n_1$ bezeichnet, die der Massgabe

$$d_1 \,.\, n_1 = l_1 \,.\, \lambda/4 \pm 20 \text{ nm}$$

genügen muss.

Um dem sich zeitlich verändernden Spannungsabfall an der Deckschicht Rechnung zu tragen, kann die Anodisierspannung im Verlaufe des Anodisierprozesses kontinuierlich oder stufenweise erhöht werden. Die optimale Anodisierspannung bzw. der optimale zeitliche Anodisierspannungsverlauf sowie die Anodisierdauer kann entweder durch einfache Vorversuche oder durch eine während dem Anodisierprozess durchzuführende Reflexionsmessung bestimmt werden.

Die elektrolytische Oxidation kann in einem Arbeitsgang durch Anlegen einer vordefinierten Anodisierspannung oder durch kontinuierliches oder stufenweises Erhöhen der Anodisierspannung auf einen vorbestimmten Wert oder auf einen Wert, der durch Messung der optimalen Reflexionseigenschaften bestimmt wird, geschehen. Die elektrolytische Oxidation kann jedoch auch in mehreren Schritten, d.h. in mehreren Arbeitsgängen, beispielsweise mit unterschiedlichen Anodisierspannungen, geschehen.

Bevorzugt wird ein Verfahren, bei dem während der elektrolytischen Oxidation die Reflexionseigenschaften des Schichtverbundes kontinuierlich gemessen werden, und die Anodisierspannung $U$ in Volt, ausgehend von einem nach Massgabe

$$d_1/1.6 \leq U_A \leq d_1/1.2$$

gewählten Anfangswert $U_A$, kontinuierlich oder stufenweise erhöht wird, bis die gemessene Reflexion ein gewünschtes Minima erreicht.

Durch die Verwendung eines nicht rücklösenden Elektrolyten sind die Aluminiumoxid-Sperrschichten nahezu porenfrei, d.h. allfällig auftretende Poren resultieren beispielsweise aus Verschmutzungen im Elektrolyten oder aus Gefüge-Fehlstellen in der Aluminium-Oberflächenschicht, jedoch nur unwesentlich durch Auflösung des Aluminiumoxids im Elektrolyten.

Derart hergestellte LI-Schichten sind mit einer genau vorgegebenen Schichtdicke versehen, porenfrei, homogen und bezüglich der elektromagnetischen Strahlung, insbesondere im sichtbaren und/oder infraroten Bereich, transparent.

Als nicht rücklösende Elektrolyten können im erfindungsgemässen Verfahren beispielsweise organische oder anorganische Säuren, in der Regel verdünnt mit Wasser, mit einem pH-Wert von 2 und grösser, bevorzugt 3 und grösser, insbesondere 4 und grösser und 7 und kleiner, bevorzugt 6 und kleiner, insbesondere 5.5 und kleiner, verwendet werden. Bevorzugt werden kalt, d.h. bei Raumtemperatur, arbeitende Elektrolyten. Besonders bevorzugt werden anorganische oder organische Säuren, wie Schwefel- oder Phosphorsäure in niedriger Konzentration, Borsäure, Adipinsäure, Zitronensäure oder Weinsäure, oder Gemische davon, oder Lösungen von Ammonium- oder Natriumsalzen von organischen oder anorganischen Säuren, insbesondere der namentlich genannten Säuren und deren Gemische. Dabei weisen die Lösungen bevorzugt eine Konzentration von total 20 g/l oder weniger, zweckmässig 2 bis 15 g/l, von im Elektrolyten gelöstem Ammonium- oder Natriumsalz auf. Ganz besonders bevorzugt werden dabei Lösungen von Ammoniumsalzen der Zitronen- oder Weinsäure oder Natriumsalzen der Phosphorsäure.

Ein ganz besonders bevorzugter Elektrolyt enthält 1 bis 5 Gew.-% Weinsäure, welcher beispielsweise eine zur Einstellung des gewünschten pH-Wertes entsprechende Menge Ammoniumhydroxid ($NH_4OH$) beigegeben werden kann.

Die Elektrolyte sind in der Regel wässrige Lösungen.

Die maximal mögliche Anodisierspannung wird durch die Spannungsfestigkeit des Elektrolyten bestimmt. Diese ist beispielsweise von der Elektrolytzusammensetzung und von der Elektrolyttemperatur abhängig und liegt üblicherweise im Bereich zwischen 300 und 600 Volt.

Die für das Anodisierverfahren optimale Elektrolyttemperatur hängt vom verwendeten Elektrolyten ab; ist aber im allgemeinen für die Qualität der erhaltenen LI-Schichten von untergeordneter Bedeutung. Für das Anodisierverfahren werden Temperaturen von 15 bis 40 °C und insbesondere solche zwischen 18 und 30 °C bevorzugt.

Die Dielektrizitätskonstante $\varepsilon_1$ einer derartigen LI-Schicht hängt u.a. von den zu ihrer Herstellung verwendeten Verfahrensparametern während der anodischen Oxidation ab. Die Dielektrizitätskonstante $\varepsilon_1$ solcher LI-Schichten beträgt bei einer Temperatur von 20 °C zwischen 6 und 10.5 und bevorzugt zwischen 8 bis 10.

Die als LI-Schicht wirkende Aluminiumoxid-Sperrschicht weist zweckmässigerweise einen Brechungsindex $n_1$ zwischen 1.55 und 1.65 auf.

In einer weiteren bevorzugten Ausführungsform besteht die LI-Schicht aus einer Sol-Gel-Schicht. Bevorzugt besteht die LI-Sol-Gel-Schicht aus oder enthält Aluminium- oder Siliziumoxid. In anderer Ausführungsform enthält die LI-Sol-Gel-Schicht ein, oder besteht die LI-Sol-Gel-Schicht aus einem der bereits für die HI-Sol-Gel-Schichten genannten Oxide, wobei für die LI-Schicht das Sol-Gel-Schichtmaterial in Funktion der zu verwendenden HI-Schicht derart gewählt wird, dass der Unterschied der Brechungsindizes möglichst gross wird.

Die LI-Schicht kann auch eine Sol-Gel-Schicht, welche aus zwei oder mehreren Teilschichten besteht, darstellen. Die LI-Schicht kann dabei auch aus mehreren bezüglich ihrer Zusammensetzung und Brechungsindizes verschiedenen Teilschichten aufgebaut sein. Wesentlich dabei ist, dass jede Teilschicht einen gegenüber der HI-Schicht kleineren Brechungsindex aufweist.

Mit vorliegender Erfindung werden auch Reflektoren mit einem reflexionserhöhenden Schichtverbund umfasst, bei denen der reflexionserhöhende Schichtverbund aus mehreren aufeinanderfolgenden LI/HI-Verbunden aufgebaut ist, wobei die verschiedenen LI/HI-Verbunde jeweils aus denselben Materialien mit denselben Brechungsindizes aufgebaut sein können, oder der reflexionserhöhende Schichtverbund mehrere LI/HI-Verbunde aus verschiedenen Materialien mit verschiedenen Brechungsindizes aufweisen kann.

Reflektoren mit einer Sol-Gel-Schicht als LI-Schicht weisen gegenüber solchen mit einer anodisch erzeugten LI-Oxidschicht den Vorteil auf, dass die chemische Zusammensetzung des Reflektorkörpers unbedeutend wird, d.h. es können auch Reflektorkörper aus unreinen und billigen Materialien eingesetzt werden. Zudem wird die Auswahl an Reflektorkörper-Materialien nicht durch die Anodisierbarkeit eingeschränkt, d.h. es können beispielsweise auch Kunststoffe als Reflektorkörpermaterialien eingesetzt werden.

Weitere bevorzugte Ausführungsformen des erfindungsgemässen Reflektors finden sich in den abhängigen Ansprüchen.

Die erfindungsgemässen Reflektoren finden bevorzugt Verwendung für lichttechnische Zwecke oder als Reflektoren für Infrarot- oder UV-Strahlung. Eine besonders bevorzugte Verwendung finden die erfindungsgemässen Reflektoren für Leuchten in der Lichttechnik und insbesondere in der Tageslichttechnik, insbesondere als funktionelle Leuchten wie Bildschirmarbeitsplatz-Leuchten, Sekundärleuchten, Rasterleuchten oder Lichtleitelemente wie Lichtleitdecken oder Lichtumlenklamellen.

Ein erfindungsgemässes Verfahren betrifft die zuvor beschriebene Herstellung von Reflektoren mit einer anodisch erzeugten Sperrschicht als LI-Schicht und einer nachfolgend aufgebrachten Sol-Gel-Schicht als HI-Schicht. Das entsprechende Verfahren eignet sich für die kontinuierliche oder stückweise Herstellung eines reflexionserhöhenden Schichtverbundes auf Bänder, Bleche, Folien oder Stückgut aus Aluminium, sowie auf Verbundwerkstoffen mit mindestens einer Deckschicht aus Aluminium.

Ein weiteres Verfahren betrifft die Herstellung des reflexionserhöhenden Schichtverbundes in einem kontinuierlich durchzuführenden Bandverfahren, beispielsweise mit einer Durchlaufanlage. Die Durchlaufanlage besteht dabei im wesentlichen entweder aus einer Bandanodisieranlage für die Herstellung einer anodisch erzeugten LI-Sperrschicht und einer Beschichtungsanlage für die Herstellung der HI-Sol-Gel-Schicht, oder aber aus einer ein- oder mehrteiligen Beschichtungsanlage für die LI- und HI-Sol-Beschichtungen mit Nachbehandlungseinrichtungen für die Umwandlung der Sol-Schichten in Gel-Schichten.

Die LI- und HI-Schichten des erfindungsgemässen Schichtverbundes weisen nur geringe Schichtdicken auf, wodurch die Schichtdickenvariationen im Vertältnis zur Wellenlänge der einfallenden elektromagnetischen Strahlung sehr klein sind und somit eine dadurch bedingte selektive Lichtabsorption oder die Bildung von Irisierungserscheinungen vernachlässigbar werden.

Beispiel:

Eine Aluminiumglanzoberfläche aus 99.90 Gew.-% Al wird mit erfindungsgemässen reflexionserhöhenden Schichtverbunden versehen; deren Reflexionseigenschaften werden mit den Oberflächeneigenschaften einer mit nur einer GS-Schicht versehenen Aluminiumglanzoberfläche verglichen.

Nachfolgende Tabelle 1 zeigt den Vergleich typischer Reflexionseigenschaften, insbesondere der jeweiligen Anteile gerichteter und gestreuter Reflexion. In der ersten Spalte sind die entsprechenden Werte einer bandanodisierten Aluminiumglanzoberfläche mit einer etwa 1.5 bis 2.0 µm dicken GS-Schicht aufgeführt; in der zweiten Spalte finden sich die Werte für eine mit einer etwa 80 nm dicken Sperrschicht versehenen Aluminiumglanzoberfläche, auf welche zusätzlich eine im wesentlichen $TiO_2$ enthaltende Sol-Gel-Schicht aufgebracht wurde; und in der dritten Spalte sind die Werte einer Aluminiumglanzoberfläche aufgeführt, welche eine etwa 120 nm dicke, im wesentlichen $SiO_2$ enthaltende LI-Sol-Gel-Schicht, sowie eine im wesentlichen $TiO_2$ enthaltende HI-Sol-Gel-Schicht aufweist. Dabei wird die $TiO_2$ enthaltende HI-Sol-Gel-Schicht durch Aufbringen einer Titanbutylat-Lösung als Sol hergestellt. Die Werte der gerichteten Reflexion ergeben sich aus der Subtraktion der gestreuten Reflexion von der Gesamtreflexion. Die Aluminiumglanzoberflächen bestehen aus Aluminium einer Reinheit von 99.90 Gew.-% Al. Die Oberflächenqualität der Aluminiumglanzoberfläche ist für alle drei Reflektortypen dieselbe. Die in der Tabelle 1 angeführten Reflexionswerte sind nach DIN 5036 gemessen und stellen jeweils eine lichttechnische Grösse dar, d.h. die gemessenen Reflexionswerte sind mit der Lichtempfindlichkeit des Auges gewichtet. Wie aus den angegebenen Werten erkennbar, wird die Gesamtreflexion, sowie die gerichtete Reflexion durch den Einsatz von erfindungsgemässen, Sol-Gel-Schichten enthaltenden, reflexionserhöhenden Schichtverbunden verbessert. Tabelle 1 zeigt zudem visuell wahrgenommene Angaben betreffend der optischen Oberflächenqualität der drei Reflektoroberflächen, namentlich betreffend der Streifigkeit und Irisierung; diese Angaben zeigen beispielsweise, dass durch das Aufbringen von erfindungsgemässen Sol-Gel-Schichten allfällig vorhandene Unebenheiten eingeebnet werden.

Tabelle 1

| | Al 99.9/045/AN Bandanodisiert GS-Schicht | Al 99.9/Sperrschicht Sol-Gel (TiO2) | Al 99.9/Sol-Gel (SiO2) Sol-Gel (TiO2) |
|---|---|---|---|
| Gesamtreflexion | 88% | 93% | 95% |
| Gestreute Reflexion | 7% | 5% | 5% |
| Streifigkeit | sichtbar | keine | keine |
| Irisierung | sichtbar | keine | keine |

**Patentansprüche**

1. Reflektor, enthaltend einen reflexionserhöhenden Schichtverbund als reflektierende Oberflächenschicht auf einem Reflektorkörper, wobei der Schichtverbund eine gegen die zu reflektierende Strahlung gerichteten äusseren Schicht, die HI-Schicht, mit einem Brechungsindex $n_2$ und eine zwischen dem Reflektorkörper und der äusseren Schicht liegende LI-Schicht mit einem gegenüber $n_2$ kleineren Brechungsindex $n_1$ enthält, und die LI- und HI-Schichten $\lambda/4$-Schichten darstellen,
dadurch gekennzeichnet, dass
die HI-Schicht eine Sol-Gel-Schicht ist, und die optischen Schichtdicken $d_{opt,1}$ der LI-Schicht und $d_{opt,2}$ der HI-Schicht der Massgabe

$$d_{opt,i} = d_i \,.\, n_i = l_i \,.\, \lambda/4 \pm 20 \text{ nm}, \ i = 1,2$$

entsprechen, wobei $d_1$ die Schichtdicke der LI-Schicht in nm, $d_2$ die Schichtdicke der HI-Schicht in nm, $\lambda$ die mittlere Wellenlänge in nm des auf die Reflektoroberfläche eingestrahlten Lichtes und $l_1$, $l_2$ ungerade natürliche Zahlen bezeichnen.

2. Reflektor nach Anspruch 1, dadurch gekennzeichnet, dass die Schichtdicken $d_1$ der LI-und $d_2$ der HI-Schicht je zwischen 30 und 350 nm betragen, wobei die an einem bestimmten Ort gemessenen Schichtdicken $d_1$ und $d_2$ gegenüber den über den ganzen Schichtverbund gemittelten Schichtdicken $\tilde{d}_1$ und $\tilde{d}_2$ um nicht mehr als ± 5 %

variieren.

**3.** Reflektor nach Anspruch 1 oder 2, dadurch gekennzeichnet, dass der Quotient $n_1/n_2$ zwischen 0.5 und 0.7 beträgt.

**4.** Reflektor nach einem der Ansprüche 1 bis 3, dadurch gekennzeichnet, dass die HI-Schicht ein Oxid eines Alkali-, Erdalkali- oder Übergangsmetalles, eines Lanthanoides oder einer Legierung dieser Stoffe, oder ein Gemisch vorgenannter Oxide, oder ein Metallfluorid enthält oder daraus besteht.

**5.** Reflektor nach Anspruch 4, dadurch gekennzeichnet, dass die HI-Schicht Ti-Oxid, PrTi-Oxid, LaTi-Oxid, Ta-Oxid, Hf-Oxid, Nb-Oxid, Zn-Oxid, Ce-Oxid, Zr-Oxid, Mo-Oxid oder ein Oxid einer Legierung vorgenannter Metalle enthält oder daraus besteht.

**6.** Reflektor nach einem der Ansprüche 1 bis 3, dadurch gekennzeichnet, dass die HI-Schicht ein Polymerisationsprodukt aus organisch substituierten Alkoxyverbindungen enthält oder daraus besteht.

**7.** Reflektor nach nach einem der Ansprüche 1 bis 6, dadurch gekennzeichnet, dass der Reflektorkörper oder zumindest die mit dem Schichtverbund zu versehende Oberflächenschicht des Reflektorkörpers aus Aluminium oder einer Aluminiumlegierung besteht.

**8.** Reflektor nach Anspruch 7, dadurch gekennzeichnet, dass das Aluminium aus Reinaluminium einer Reinheit von 98.3 Gew.-% Al und höher, oder die Aluminiumlegierung aus Aluminium vorgenannter Reinheiten mit wenigstens einem der Elemente aus der Reihe von Si, Mg, Mn, Cu, Zn oder Fe besteht.

**9.** Reflektor nach Anspruch 7 oder 8, dadurch gekennzeichnet, dass die LI-Schicht eine aus der Aluminiumschicht anodisch erzeugte, transparente und porenfreie Sperrschicht mit einer Dielektrizitätskonstanten $\varepsilon_1$ bei 20 °C von 6 bis 10.5 ist.

**10.** Reflektor nach einem der Ansprüche 1 bis 8, dadurch gekennzeichnet, dass die LI-Schicht eine Sol-Gel-Schicht ist und ein Siliziumoxid, Aluminiumoxid oder ein Oxid eines Alkali-, Erdalkali- oder Übergangsmetalles, eines Lanthanoides oder einer Legierung dieser Stoffe, oder ein Gemisch vorgenannter Oxide, oder ein Metallfluorid enthält oder daraus besteht.

**11.** Reflektor nach einem der Ansprüche 1 bis 8, dadurch gekennzeichnet, dass die LI-Schicht eine Sol-Gel-Schicht ist und ein Polymerisationsprodukt aus organisch substituierten Alkoxyverbindungen darstellt.

**12.** Reflektor nach einem der Ansprüche 1 bis 11, dadurch gekennzeichnet, dass der Schichtverbund weniger als 3 % der eingestrahlten Lichtenergie absorbiert.

**13.** Verwendung der Reflektoren nach einem der Ansprüche 1 bis 12 als Reflektoren für Infrarot- oder UV-Strahlung oder für Leuchten in der Lichttechnik und insbesondere in der Tageslichttechnik.

**14.** Verwendung der Reflektoren nach einem der Ansprüche 1 bis 12 als Reflektoren in Bildschirmarbeitsplatz-Leuchten, Sekundärleuchten, Rasterleuchten oder als Lichtleitelemente, Lichtdecken oder Lichtumlenklamellen.

**15.** Verwendung der Reflektoren nach einem der Ansprüche 1 bis 12 zur Reflexion elektromagnetischer Strahlung mit einer Wellenlänge $\lambda$, welche der mittleren, für das menschliche Auge bei Tageslicht am besten wahrnehmbaren Wellenlänge des sichbaren Lichtes entspricht.

**16.** Verfahren zur Herstellung eines Reflektors nach Anspruch 9, dadurch gekennzeichnet, dass

a) die Aluminiumschicht des Reflektorkörpers in einem Aluminiumoxid nicht auflösenden Elektrolyten elektrolytisch oxidiert wird, wobei während der elektrolytischen Oxidation die Reflexionseigenschaften des Schichtverbundes kontinuierlich gemessen werden, und die Anodisierspannung $U$ in Volt, ausgehend von einem nach Massgabe

$$d_1/1.6 \leq U_A \leq d_1/1.2$$

gewählten Anfangswert $U_A$, kontinuierlich oder stufenweise erhöht wird, bis die gemessene Reflexion ein

gewünschtes Minima erreicht, und

b) eine HI-Schicht durch Eintauchen der mit der LI-Schicht versehenen Reflektorkörperoberfläche in ein Solbad oder durch Aufschleudern oder Aufspritzen des Sols auf die LI-Schicht aufgebracht wird, und die Sol-Schicht unter Einfluss einer gegenüber Raumtemperatur erhöhten Temperatur oder Strahlung in eine Gel-Schicht umgewandelt wird.

**17.** Verfahren zur Herstellung eines Reflektors nach einem der Ansprüche 1 bis 12, dadurch gekennzeichnet, dass die Herstellung des reflexionserhöhenden Schichtverbundes kontinuierlich mittels einem Bandbeschichtungsverfahren geschieht.

Europäisches Patentamt

# EUROPÄISCHER RECHERCHENBERICHT

Nummer der Anmeldung
EP 96 81 0430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br><br>A | FR-A-2 682 486 (COMMISSARIAT A L'ENERGIE ATOMIQUE) 16.April 1993<br>* das ganze Dokument *<br>--- | 1,3-5, 10,12,13<br>2,11,15, 17 | G02B5/08<br>G02B1/10 |
| A | APPLIED OPTICS, Bd. 28, Nr. 18, 15.September 1989, Seiten 4013-4016, XP000065021<br>THOMAS I M: "SINGLE LAYER AL2O3.H2O AND MULTILAYER AL2O3.H2O-SIO2 OPTICAL COATINGS PREPARED FROM COLLOIDAL SUSPENSIONS"<br>* das ganze Dokument *<br>--- | 1,4,5,10 | |
| A | THIN SOLID FILMS, Bd. 175, Nr. 1, 1.August 1989, LAUSANNE, CH, Seiten 173-178, XP000084286<br>FLOCH H G ET AL: "OPTICAL COATINGS PREPARED FROM COLLOIDAL MEDIA"<br>* das ganze Dokument *<br>--- | 1,4,5,10 | |
| A | EP-A-0 515 848 (CENTRAL GLASS CO LTD) 2.Dezember 1992<br>* das ganze Dokument *<br>--- | 1,4,5,10 | RECHERCHIERTE SACHGEBIETE (Int.Cl.6)<br>G02B |
| A | EP-A-0 456 488 (BOC GROUP INC) 13.November 1991<br>* das ganze Dokument *<br>----- | 1,4,5,10 | |

Der vorliegende Recherchenbericht wurde für alle Patentansprüche erstellt

| Recherchenort | Abschlußdatum der Recherche | Prüfer |
|---|---|---|
| DEN HAAG | 28.November 1996 | Ward, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)